# EUROPÄISCHE PATENTSCHRIFT

(11) **EP 4 067 716 B1**
(45) Veröffentlichungstag und Bekanntmachung des Hinweises auf die Patenterteilung: **03.01.2024**
(21) Anmeldenummer: 22165523.6
(22) Anmeldetag: 30.03.2022
(51) Int. Cl.: F16L 1/09

(54) **ROHRABSCHNITTSMONTAGEVORRICHTUNG**
TUBE SECTION MOUNTING DEVICE
DISPOSITIF DE MONTAGE DE SECTION DE TUBE

(30) Priorität: 30.03.2021 DE 102021107962
(43) Veröffentlichungstag der Anmeldung: 05.10.2022
(73) Patentinhaber: Pohlers, Wolfgang, 37539 Bad Grund (Harz) (DE)
(72) Erfinder: Pohlers, Wolfgang, 37539 Bad Grund (Harz) (DE)
(74) Vertreter: REHBERG HÜPPE + PARTNER

(56) Entgegenhaltungen:
- CN-B- 108 488 484
- DE-B- 1 012 132
- US-A- 889 315
- US-A1- 2014 020 231
- .: "Workbench Hardware: Screw Spindles, Front Vises, Back Vises, Tommy Bars, Veneer Press Spindle", , 2. Oktober 2016 (2016-10-02), Seiten 1-10, XP055944702, Gefunden im Internet: URL:https://web.archive.org/web/2016100223 5253/http://www.fine-tools.com/spindel.htm l [gefunden am 2022-07-20]

## Beschreibung

### TECHNISCHES GEBIET DER ERFINDUNG

Die Erfindung betrifft das technische Gebiet der Herstellung von Rohrleitungen aus einer Mehrzahl von miteinander zu verbindenden Rohrabschnitten. Bei den Rohrleitungen kann es sich beispielsweise um solche zum Führen von Wasser, Abwasser, Regenwasser, Öl oder Dampf handeln.

Die axialen Enden der Rohrabschnitte werden hierfür ineinandergesteckt. Um eine abgedichtete Verbindung zwischen den Rohrabschnitten zu erreichen, wird vor deren Verbindung eine Dichtung in eines der Enden eingebracht. Bei der für die Verbindung erforderlichen axialen Relativbewegung zwischen den Rohrabschnitten tritt im Bereich dieser Dichtung eine hohe Reibungskraft auf. Um diese zu überwinden ist eine erhebliche Kraftanstrengung des Monteurs erforderlich. Entsprechendes gilt - in der Praxis oftmals sogar in verstärktem Maß - beim Trennen von Rohrabschnitten voneinander.

### STAND DER TECHNIK

Im Stand der Technik werden von Monteuren zur Bildung von Rohrleitungen die Rohrabschnitte manuell miteinander verbunden. Wenn überhaupt ein Werkzeug eingesetzt wird, handelt es sich dabei um einen Hammer. Wenn aber mit einem Hammer auf das der Verbindungsstelle gegenüberliegende freie axiale Ende eines Rohrabschnitts geschlagen wird, wird die Kraft nur lokal eingeleitet. Damit besteht die Gefahr, dass die Längsachsen der Rohrabschnitte nicht mehr übereinander liegen, d. h. sich die Rohrabschnitte schief zueinander stellen. Dadurch wird die erforderliche Fortsetzung der Relativbewegung weiter erschwert.

Eine Vorrichtung zum Verbinden von getrennten Rohrabschnitten miteinander und zum Trennen von miteinander verbundenen Rohrabschnitten voneinander ist aus der deutschen Patentanmeldung DE 1 012 132 A bekannt. Die Vorrichtung weist zwei Rohrabschnittseinspannvorrichtungen zum Einspannen jeweils eines Rohrabschnitts auf. Die Vorrichtung weist weiterhin zwei Axialführungseinrichtungen auf, die die erste Rohrabschnittseinspannvorrichtung mit der zweiten Rohrabschnittseinspannvorrichtung verbinden. Eine Betätigungseinrichtung dient zum Betätigen der Vorrichtung zum Verringern und Vergrößern des axialen Abstands zwischen den Rohrabschnittseinspannvorrichtungen. Eine Synchronisierungsvorrichtung verbindet die Betätigungseinrichtung und die Axialführungseinrichtungen und synchronisiert eine Bewegung der Axialführungseinrichtungen miteinander.

### AUFGABE DER ERFINDUNG

Der Erfindung liegt die Aufgabe zugrunde, eine Vorrichtung bereitzustellen, mit der in verlässlicher und kraftsparender Weise eine abgedichtete Rohrleitung aus Rohrabschnitten zusammengesetzt und auseinandergenommen werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Vorrichtung zum Verbinden von getrennten Rohrabschnitten miteinander und zum Trennen von miteinander verbundenen Rohrabschnitten voneinander. Die Vorrichtung weist eine erste Rohrabschnittseinspannvorrichtung zum Einspannen eines ersten Rohrabschnitts und eine zweite Rohrabschnittseinspannvorrichtung zum Einspannen eines zweiten Rohrabschnitts auf. Zwei Axialführungseinrichtungen verbinden die erste Rohrabschnittseinspannvorrichtung mit der zweiten Rohrabschnittseinspannvorrichtung. Eine Betätigungseinrichtung dient zur Betätigung der Vorrichtung zum Verringern und Vergrößern des axialen Abstands zwischen den Rohrabschnittseinspannvorrichtungen. Eine Synchronisierungseinrichtung verbindet die Betätigungseinrichtung und die zwei Axialführungseinrichtungen miteinander und synchronisiert eine Bewegung der Axialführungseinrichtungen miteinander.

Bei den Rohrleitungen kann es sich beispielsweise um solche zum Führen von Fluiden, Wasser, Abwasser, Regenwasser, Öl, Luft, Gas, Rauchgas oder Dampf handeln. Es ist aber auch möglich, dass es sich um Rohrleitungen bzw. Leerrohre zum Verlegen von Kabeln handelt.

Für das Erzeugen der Rohrleitung werden die axialen Enden der Rohrabschnitte ineinandergesteckt. Um dies geometrisch zu ermöglichen, weisen die Rohrabschnitte zwei unterschiedlich ausgebildete axiale Enden auf. Eines der axialen Enden weist einen vergrößerten Innendurchmesser im Vergleich zum Rest des Rohrabschnitts einschließlich des anderen Endes auf. Dadurch kann das "normal" ausgebildete andere Ende eines anderen Rohrabschnitts in dieses "vergrößerte" Ende eingebracht werden. Das vergrößerte Ende wird auch als "gemufftes" Ende bezeichnet.

Unter der axialen Richtung wird in dieser Anmeldung die Richtung verstanden, die der Längsrichtung der langgestreckten Rohrabschnitte entspricht. Die Rohrabschnitte weisen dabei insbesondere eine zylindrische Form auf und sind symmetrisch zu einer Längsmittelachse ausgebildet. Es ist aber auch möglich, dass die Rohrabschnitte eine rechteckige, quadratische, vieleckige, ovale oder andere Form aufweisen.

Um eine abgedichtete Verbindung zwischen den Rohrabschnitten herzustellen, wird vor deren Verbindung eine Dichtung in das gemuffte Ende eingebracht (oder ist dort bereits vorhanden). Die Rohrabschnitte selbst bestehen insbesondere aus Metall, Kunststoff, Keramik oder einem Verbundwerkstoff. Die Dichtung ist elastisch und besteht z. B. aus Gummi oder Silikon. Damit liegen im Verbindungsbereich zwischen der Dichtung des einen Rohrabschnitts und dem anderen Rohrabschnitt ein hoher Reibungskoeffizient und eine hohe Reibungskraft vor. Um diese für die erforderliche axiale Relativbewegung zwischen den Rohrabschnitten zu überwinden, muss also eine große Druckkraft aufgebracht werden. Entsprechendes gilt - in der Praxis oftmals sogar in verstärktem Maß - für die Zugkraft beim Trennen der Rohrabschnitte voneinander. Besonders schwer ist diese Demontage, wenn die Rohrleitung alt ist oder die Rohrabschnitte miteinander verklebt wurden. Eingetrocknetes Schmiermittel erhöht ebenfalls oftmals die Reibungskraft.

Mit der neuen Vorrichtung lassen sich in für den Monteur einfacher und kraftsparender Weise eine große Druckkraft und eine große Zugkraft erzeugen und diese gleichmäßig und richtungsrichtig auf die Rohrabschnitte aufbringen. Damit können Rohrleitungen einfach und schnell montiert und demontiert werden.

Mit der neuen Vorrichtung werden die Rohrabschnitte in einer definierten Richtung kontrolliert zueinander bewegt. Durch die Synchronisierungseinrichtung wird ein Verkippen der Rohrabschnitte zueinander verhindert. Durch die Betätigungseinrichtung lassen sich effektiv und ohne großen Kraftaufwand für den Monteur auch sehr große Reibungskräfte überwinden. Selbst miteinander verklebte oder durch Korrosion oder andere Effekte stark aneinander haftende Rohrabschnitte können mit der neuen Vorrichtung gut voneinander getrennt werden.

Die neue Vorrichtung ist dabei universell an verschiedenen Einbauorten nutzbar. Sie eignet sich sowohl für eine vertikale Verlegung als auch eine horizontale oder schräge Verlegung. Auch normalerweise besonders schwierig herzustellende Rohrverbindungen über Kopf oder bei engen Einbausituationen lassen sich gut herstellen.

Die Vorrichtung weist mindestens zwei Axialführungseinrichtungen auf. Es können aber auch drei, vier oder mehr Axialführungseinrichtungen vorhanden sein. Die Axialführungseinrichtungen sind beabstandet zueinander angeordnet und stellen sicher, dass es bei einer Betätigung der Betätigungseinrichtung zu keiner oder zumindest keiner nennenswerten Verkippung zwischen den Rohrabschnitten kommt. Eine mögliche Anordnung ist, dass die zwei Axialführungseinrichtungen im Querschnitt gesehen auf gegenüberliegenden Seiten der Rohrabschnitte liegen. Anders gesagt liegt zwischen ihnen ein Winkel von etwa 180°. Bei drei Axialführungseinrichtungen würde dieser Winkel entsprechend 120° betragen.

Die Rohrabschnittseinspannvorrichtungen sind so ausgebildet, dass die Rohrabschnitte sicher und fest eingespannt werden können, so dass eine Relativbewegung zwischen dem jeweiligen Rohrabschnitt und der Rohrabschnittseinspannvorrichtung verhindert wird. Somit findet die Relativbewegung bei einer Betätigung der Vorrichtung nur zwischen den Rohrabschnitten und den Rohrabschnittseinspannvorrichtungen statt.

Die Rohrabschnittseinspannvorrichtungen, die Axialführungseinrichtungen und die Synchronisierungseinrichtung können so ausgebildet und angeordnet sein, dass sich der axiale Abstand zwischen den Rohrabschnittseinspannvorrichtungen bei einer fortgesetzten Betätigung der Betätigungseinrichtung in einem ersten Betätigungsrichtungssinn verringert und in einem entgegengesetzten zweiten Betätigungsrichtungssinn vergrößert. Dem einen Betätigungsrichtungssinn ist also die Montage und dem anderen Betätigungsrichtungssinn die Demontage der Rohrabschnitte zugeordnet.

Die Betätigungseinrichtung kann direkt mit einer Axialführungseinrichtung verbunden sein und auf diese einwirken. Die Kraft- und Momentübertragung verläuft dann also im Sinne von "Betätigungseinrichtung → erste Axialführungseinrichtung → Synchronisierungseinrichtung --+ zweite Axialführungseinrichtung", wobei ggf. weitere Elemente zwischengeschaltet sind. Es ist aber auch möglich, dass die Betätigungseinrichtung direkt mit der Synchronisierungseinrichtung verbunden ist und auf diese einwirkt. In diesem Fall verläuft die Kraft- und Momentübertragung im Sinne von "Betätigungseinrichtung --+ Synchronisierungseinrichtung → erste und zweite Axialführungseinrichtung", wobei ggf. weitere Elemente zwischengeschaltet sind.

Bei dem Betätigungsrichtungssinn kann es sich um einen Drehrichtungssinn handeln. Eine Drehbewegung in der Betätigungseinrichtung kann zu einer Drehbewegung in den Axialführungseinrichtungen führen. Andere Wirkprinzipien sind aber ebenfalls möglich. So kann auch eine Drehbewegung in eine translatorische Bewegung oder eine translatorische Bewegung in eine Drehbewegung umgesetzt werden.

Die Vorrichtung kann zur Bildung von zwei miteinander synchronisierten Gewindespindeln ausgebildet sein. Die zwei oder mehr Axialführungseinrichtungen sind also nach dem Prinzip einer Gewindespindel ausgebildet. Damit eine gleichmäßige Kraftübertragung erreicht und ein Verkippen der Rohrabschnitte zueinander verhindert wird, sind diese beiden Gewindespindeln miteinander synchronisiert. Ihre Bewegungen laufen also übereinstimmend ab.

Die Synchronisierungseinrichtung ist als Drehmomentübertragungseinrichtung ausgebildet. Mittels der Synchronisierungseinrichtung wird ein Drehmoment auf die Axialführungseinrichtungen übertragen. Für diese Übertragung weist die Drehmomentübertragungseinrichtung ein geeignetes Drehmomentübertragungselement auf. Dabei kann es sich beispielsweise um eine Kette oder einen Riemen handeln. Andere Übertragungselemente sind aber ebenfalls möglich.

Die Axialführungseinrichtungen können jeweils eine Welle mit einem Außengewinde aufweisen. Die Welle bildet dann einen Teil der jeweiligen Gewindespindel und wird während der Betätigung der Vorrichtung verdreht.

Eine der zwei Rohrabschnittseinspannvorrichtungen weist die zu dem Außengewinde der Wellen korrespondierenden Innengewinde zur Bildung der Gewindespindeln auf. Eine erste Möglichkeit ist es also, dass die erste Rohrabschnittseinspannvorrichtung zwei Bohrungen mit einem Innengewinde aufweist, wobei das Innengewinde zu dem Außengewinde der Wellen korrespondiert und sich die Wellen durch die Bohrungen erstrecken ("gewindebehaftete Rohrabschnittseinspannvorrichtung"). Die Bohrungen können als Gewindebohrungen ausgebildet sein. Es kann aber auch ein anderes Bauteil mit dem Innengewinde - insbesondere eine Gewindemutter - in die glatte Durchgangsbohrung eingesetzt sein. Die zweite Rohrabschnittseinspannvorrichtung weist dann zwei Bohrungen mit jeweils einem Lager auf, wobei sich die Wellen oder mit diesen verbundene Teile durch die Lager erstrecken ("gelagerte Rohrabschnittseinspannvorrichtung"). Eine zweite Möglichkeit ist, dass die zweite Rohrabschnittseinspannvorrichtung die gewindebehaftete Rohrabschnittseinspannvorrichtung und die erste Rohrabschnittseinspannvorrichtung die gelagerte Rohrabschnittseinspannvorrichtung ist. Es wäre auch eine gespiegelte, gemischte Anordnung der Gewindeverbindungen und der Lager derart möglich, dass jede der Rohrabschnittseinspannvorrichtung eine Gewindeverbindung und ein Lager aufweist.

Bei der gelagerten Rohrabschnittseinspannvorrichtung handelt es sich insbesondere um die Rohrabschnittseinspannvorrichtung, an der die Synchronisierungseinrichtung angeordnet ist. Die in diesem Sinne gebildete Einheit stellt die Basiseinheit der Vorrichtung dar. Die andere Rohrabschnittseinspannvorrichtung mit den Wellen stellt die Ergänzungseinheit dar. Die Ergänzungseinheit kann so ausgebildet sein, dass sie einfach und schnell von der Basiseinheit getrennt und durch eine andere Ergänzungseinheit ersetzt werden kann. Diese andere Ergänzungseinheit kann dann eine anders ausgebildete Rohrabschnittseinspannvorrichtung aufweisen. So können insbesondere die Spannbacken eine andere Innengeometrie aufweisen, um mit ihnen einen Rohrabschnitt mit einer anderen Außengeometrie spannen zu können. Eine mögliche Anwendung hierfür ist, dass mit der Basiseinheit ein Rohrabschnitt auf seinem normalen Außendurchmesser und mit der Ergänzungseinheit ein Rohrabschnitt auf seinem vergrößerten Außendurchmesser im Bereich seines gemufften Endes gespannt werden soll.

Für diesen Schnellwechsel können die Basiseinheit und die Ergänzungseinheit jeweils ein zueinander passendes Adapterelement aufweisen, das mittels eines Werkzeugs schnell geöffnet und geschlossen werden kann. Das Adapterelement kann z. B. eine Sicherungsmutter, insbesondere eine Überwurfmutter, aufweisen.

Die Vorrichtung kann eine Mehrzahl von Betätigungseinrichtungen aufweisen, die wahlweise für eine Betätigung der Vorrichtung alternativ verwendbar sind. Für die Betätigung der Vorrichtung müssen also nicht mehrere Betätigungseinrichtungen gleichzeitig, sondern immer nur eine Betätigungseinrichtung betätigt werden. Wenn mehrere Betätigungseinrichtungen vorhanden sind, kann der Monteur eine geeignete Betätigungseinrichtung aus der Mehrzahl der Betätigungseinrichtungen auswählen und diese verwenden. Damit lässt sich die Vorrichtung flexibel und auch bei schwierigen Montagesituationen einsetzen.

Die Betätigungseinrichtung kann ein Werkzeugangriffselement zum Ansetzen eines Werkzeugs und zum Betätigen der Betätigungseinrichtung mittels des Werkzeugs aufweisen. Bei dem Werkzeugangriffselement kann es sich beispielsweise um eine Mutter mit einer geeigneten Kraftangriffsfläche handeln. Beispiele sind Innensechskant, Außensechskant, Innenvierkant, Außenvierkant, Innensechsrund usw. Bei dem Werkzeug kann es sich um einen Schraubenschlüssel, eine Knarre oder Ratsche, einen Akkuschrauber, einen Druckluftschrauber oder eine Bohrmaschine handeln.

Es ist aber auch möglich, dass die Vorrichtung einen motorischen Antrieb aufweist, so dass für ihre Betätigung kein separates Werkzeug und keine Kraftaufbringung durch den Monteur erforderlich ist. Der motorische Antrieb kann insbesondere einen Elektromotor mit einem Netzanschluss oder einem Akkumulator aufweisen.

Die Rohrabschnittseinspannvorrichtungen können jeweils zwei Spannbacken aufweisen, deren Innengeometrie an die Außengeometrie der Rohrabschnitte angepasst sind. Sie können weiterhin jeweils ein Schwenklager aufweisen, das die Spannbacken an einer Seite miteinander verbindet. In dieser Weise wird eine einfach handhabbare Einspannvorrichtung bereitgestellt, bei der eine Fehlbedienung oder das Verlieren von Teilen praktisch unmöglich ist.

Die Geometrie der Rohrabschnittseinspannvorrichtungen kann an einen definierten Durchmesser der Rohrabschnitte angepasst sein. Es ist aber auch möglich, dass die Rohrabschnittseinspannvorrichtungen so ausgebildet sind, dass mit ihnen innerhalb eines bestimmten Durchmesserbereichs unterschiedlich große Rohrabschnitte gespannt werden können.

Die Rohrabschnittseinspannvorrichtungen können jeweils an einer dem Schwenklager gegenüberliegenden Seite einen Klemmhebel aufweisen. Über das Schwenklager lässt sich die jeweilige Rohrabschnittseinspannvorrichtung einfach öffnen und der jeweilige Rohrabschnitt in die Rohrabschnittseinspannvorrichtung einbringen. Durch den Klemmhebel wird die Rohrabschnittseinspannvorrichtung letztendlich verschlossen und die erforderliche Klemmkraft aufgebracht.

Mit der neuen Vorrichtung lassen sich beliebige Durchmesser von Rohrabschnitten verarbeiten. Die Geometrie der Spannbacken der Rohrabschnittseinspannvorrichtungen kann aber insbesondere an die standardisierten Außendurchmesser von Rohren und Fittings im Bereich der Abwassertechnik angepasst sein. Diese Durchmesser beginnen z. B. bei 10 mm und enden bei 1.000 mm. Es kann aber auch auf die Nennweite DN - also den Innendurchmesser des Rohrs - Bezug genommen werden. Andere Außendurchmesser und Innendurchmesser sind aber ebenfalls verarbeitbar.

Mit der neuen Vorrichtung lassen sich bei geringem Kraftaufwand des Monteurs sehr große Druckkräfte und Zugkräfte erzeugen. Diese liegen beispielsweise in einer Größenordnung von 10 kN bis 40 kN.

Zur Erleichterung der Montage kann zusätzlich die Reibungskraft reduziert werden, indem ein Schmiermittel eingesetzt wird. Das Schmiermittel wird insbesondere auf das normale Ende des Rohrabschnitts aufgebracht, das in das gemuffte Ende eines anderen Rohabschnitts geschoben werden soll.

Die Erfindung betrifft weiterhin einen Montageständer zum Verbinden von getrennten Rohrabschnitten miteinander mittels einer derartigen Vorrichtung. Der Montageständer weist einen Grundkörper mit einer Schieneneinrichtung zum verschieblichen Lagern der ersten Rohrabschnittseinspannvorrichtung und/oder der zweiten Rohrabschnittseinspannvorrichtung auf.

Der Montageständer dient zum Aufnehmen der Vorrichtung und der Rohrabschnitte derart, dass der Monteur die Montage in ergonomischer Weise durchführen kann. Für eine ergonomische Arbeitshöhe kann der Grundkörper mit Beinen verbunden sein.

Der Montageständer kann eine Rohrabschnittsstützvorrichtung aufweisen, die verschieblich in der Schieneneinrichtung aufgenommen ist und zum Stützen eines Rohrabschnitts während der Montage ausgebildet und angeordnet ist. Vorzugsweise ist beiden Rohrleitungsenden jeweils eine derartige Rohrabschnittsstützvorrichtung zugeordnet.

Der Montageständer kann eine weitere Rohrabschnittsstützvorrichtung aufweisen, die an einer Auszugstange angeordnet ist, wobei die Auszugstange relativ zu dem Grundkörper ausziehbar und in diesem unterbringbar ausgebildet und angeordnet ist. Vorzugsweise ist eine derartige Auszugstange an beiden Enden des Montageständers vorhanden, so dass beiden Rohrleitungsenden jeweils eine derartige Rohrabschnittsstützvorrichtung zugeordnet.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Synchronisierungseinrichtung die Rede ist, ist dies so zu verstehen, dass genau eine Synchronisierungseinrichtung, zwei Synchronisierungseinrichtungen oder mehr Synchronisierungseinrichtungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine isometrische Ansicht einer beispielhaften Ausführungsform einer neuen Vorrichtung zum Verbinden und Trennen von Rohrabschnitten.
- **Fig. 2**: zeigt eine Draufsicht der Vorrichtung.
- **Fig. 3**: zeigt eine Seitenansicht der Vorrichtung.
- **Fig. 4**: zeigt eine Schnittansicht der Vorrichtung gemäß Linie A-A in Fig. 2.
- **Fig. 5**: zeigt eine Schnittansicht der Vorrichtung gemäß Linie B-B in Fig. 3.
- **Fig. 6**: zeigt eine Schnittansicht der Vorrichtung gemäß Linie C-C in Fig. 2.
- **Fig. 7**: zeigt eine Explosionsansicht der Vorrichtung.
- **Fig. 8**: zeigt eine isometrische Ansicht einer beispielhaften Ausführungsform eines neuen Montageständers mit einer neuen Vorrichtung zum Verbinden und Trennen von Rohrabschnitten.
- **Fig. 9**: zeigt eine Seitenansicht des Montageständers.
- **Fig. 10**: zeigt eine Draufsicht des Montageständers.
- **Fig. 11**: zeigt eine Frontansicht des Montageständers.
- **Fig. 12**: zeigt eine Explosionsansicht des Montageständers.
- **Fig. 13**: zeigt eine weitere Ausgestaltung der Vorrichtung in einer Explosionsansicht.
- **Fig. 14**: zeigt ein Detail XIV der Explosionsansicht gemäß Fig. 13 im Bereich einer Schnellwechseleinrichtung.
- **Fig. 15**: zeigt einen Schnitt durch die Vorrichtung gemäß Fig. 13 und 14 im Bereich der Schnellwechseleinrichtung.

### FIGURENBESCHREIBUNG

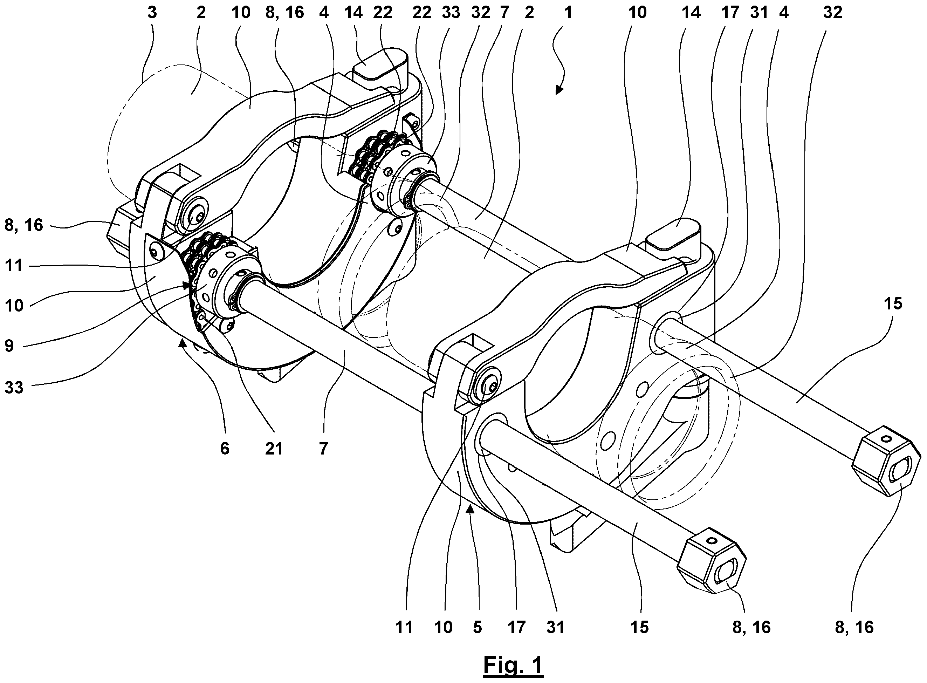

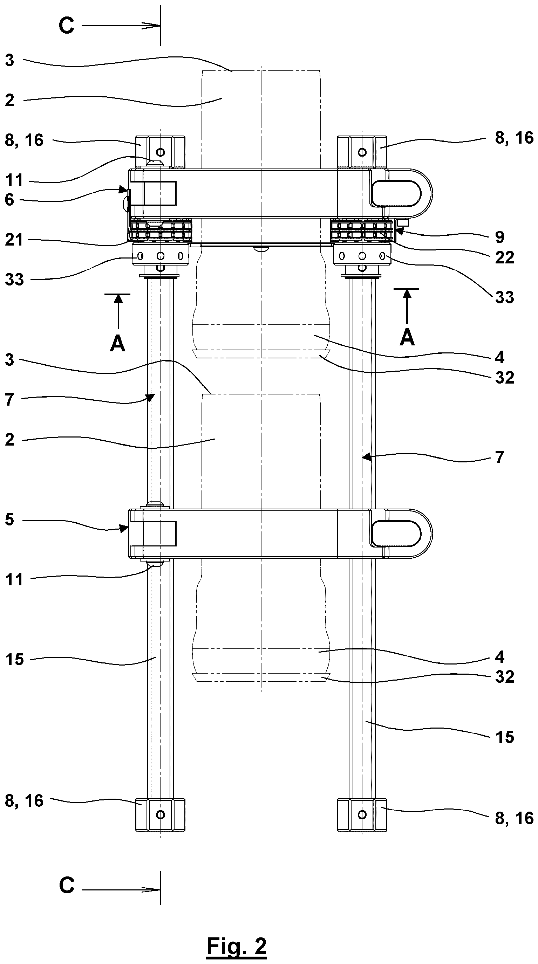

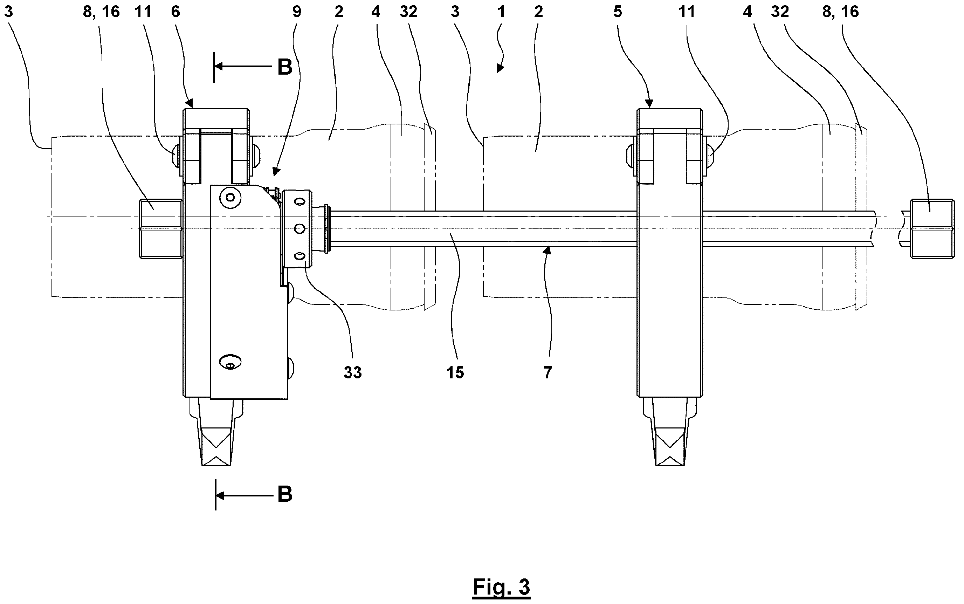

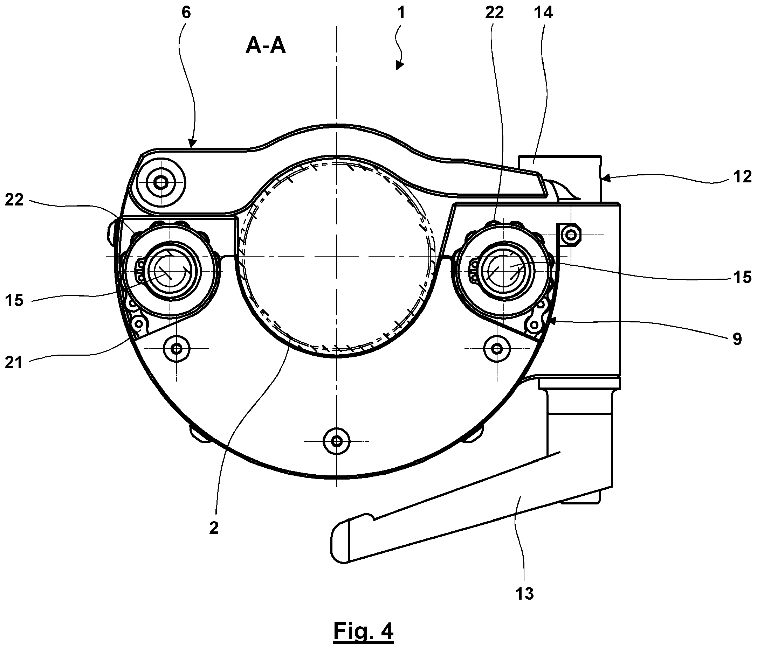

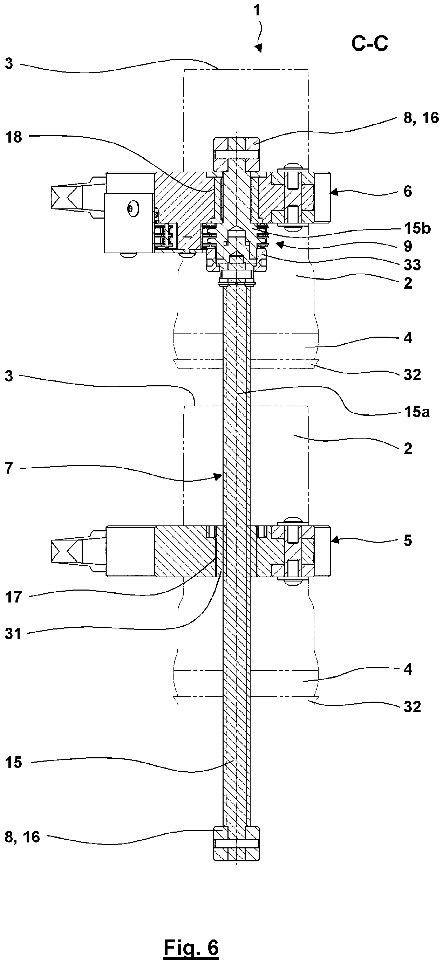

Fig. 1-7 zeigen verschiedene Ansichten einer beispielhaften Ausführungsform einer neuen Vorrichtung 1 zum Verbinden von getrennten Rohrabschnitten 2 miteinander und zum Trennen von miteinander verbundenen Rohrabschnitten 2 voneinander.

Die Rohrabschnitte 2 sind in teilweise gestrichelten Linien dargestellt. Die Rohrabschnitte 2 weisen jeweils ein "normales" Ende 3 und ein gemufftes Ende 4 auf. Die Rohrabschnitte 2 weisen in diesem Beispiel eine langgestreckte zylindrische Form auf, so dass ihre Längsmittelachse die axiale Richtung der Vorrichtung 1 definiert. In dieser axialen Richtung wird das normale Ende 3 eines ersten Rohrabschnitts 2 mit dem gemufften Ende 4 eines zweiten Rohrabschnitts 2 durch Ineinanderstecken miteinander verbunden.

Die Vorrichtung 1 weist eine erste Rohrabschnittseinspannvorrichtung 5 zum Einspannen eines ersten Rohrabschnitts 2 auf. Die Vorrichtung 1 weist weiterhin eine zweite Rohrabschnittseinspannvorrichtung 6 zum Einspannen eines zweiten Rohrabschnitts 2 auf. Jede der Rohrabschnittseinspannvorrichtungen 5, 6 ist jeweils einem Rohrabschnitt 2 zugeordnet. Die Bezeichnung als "erste" Rohrabschnittseinspannvorrichtung und "zweite" Rohrabschnittseinspannvorrichtung dient lediglich der eindeutigen Bezugnahme auf die jeweilige Rohrabschnittseinspannvorrichtung 5, 6. Die weiter unterhalb beschriebenen Details der ersten Rohrabschnittseinspannvorrichtung 5 könnten stattdessen bei der zweiten Rohrabschnittseinspannvorrichtung 6 und umgekehrt vorhanden sein.

Die Vorrichtung 1 weist weiterhin mindestens zwei Axialführungseinrichtungen 7 auf, die die erste Rohrabschnittseinspannvorrichtung 5 mit der zweiten Rohrabschnittseinspannvorrichtung 6 verbinden.

Die Vorrichtung 1 weist mindestens eine Betätigungseinrichtung 8 für eine Betätigung der Vorrichtung 1 zum Verringern und Vergrößern des axialen Abstands zwischen den Rohrabschnittseinspannvorrichtungen 5, 6 auf. Im vorliegenden Beispiel weist die Vorrichtung 1 vier Betätigungseinrichtungen 8 auf.

Die Vorrichtung 1 weist eine Synchronisierungseinrichtung 9 auf, die die Betätigungseinrichtungen 8 und die Axialführungseinrichtungen 7 miteinander verbindet und eine Bewegung der Axialführungseinrichtungen 7 miteinander synchronisiert.

Damit sind die Rohrabschnittseinspannvorrichtungen 5, 6, die Axialführungseinrichtungen 7 und die Synchronisierungseinrichtung 9 so ausgebildet und angeordnet, dass sich der axiale Abstand zwischen den Rohrabschnittseinspannvorrichtungen 5, 6 bei einer vorgesetzten Betätigung einer beliebigen der Betätigungseinrichtungen 8 in einem ersten Betätigungsrichtungssinn verringert und in einem entgegengesetzten zweiten Betätigungsrichtungssinn vergrößert. Im vorliegenden Fall handelt es sich bei dem Betätigungsrichtungssinn um einen Drehrichtungssinn.

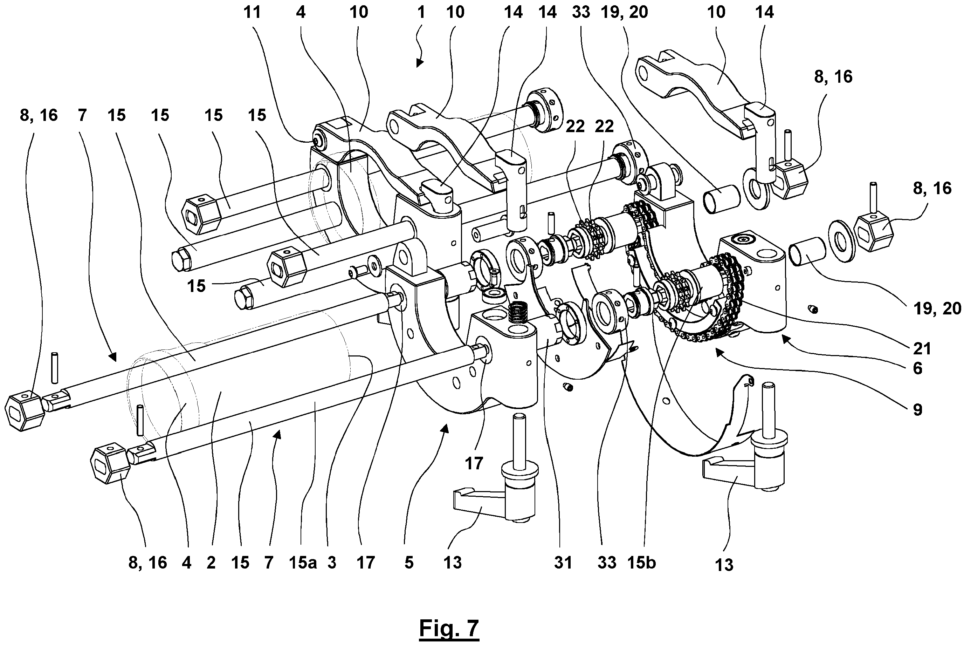

Im Folgenden werden nun einige der oberhalb beschriebenen Teile der Vorrichtung 1 genauer beschrieben. Zusätzliche Details sind in den Zeichnungen und insbesondere in der Explosionsdarstellung gemäß Fig. 7 gut erkennbar. Es werden daher nicht alle dort für den Fachmann nachvollziehbar dargestellten technischen Details verbal beschrieben. Zudem versteht es sich, dass die im Folgenden beschriebenen technischen Details beispielhaft sind und auch anders realisiert sein könnten.

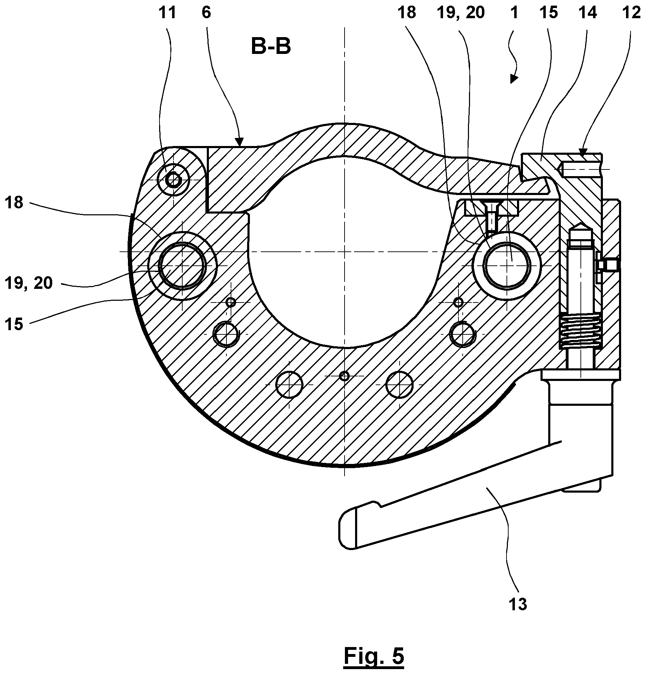

Die erste Rohrabschnittseinspannvorrichtung 5 weist zwei Spannbacken 10 auf, deren Innengeometrie an die Außengeometrie des einzuspannenden Rohrabschnitts 2 angepasst ist. Die beiden Spannbacken 10 sind mittels eine Schwenklagers 11 miteinander verbunden, so dass die Rohrabschnittseinspannvorrichtung 5 für das Einführen eines Rohrabschnitts 2 aufklappbar und für dessen Einspannung zuklappbar und verspannbar ist. An der dem Schwenklager 11 gegenüberliegenden Seite weist die Rohrabschnittseinspannvorrichtung 5 eine Schließvorrichtung 12 mit einem Klemmhebel 13 auf. Die Details der Schließvorrichtung 12 sind besonders gut in der Schnittansicht gemäß Fig. 5 zu erkennen. Die Schließvorrichtung 12 weist einen Schließfortsatz 14 auf, der die obere Spannbacke 10 in Richtung der unteren Spannbacke 10 drückt und dadurch die Klemmung herstellt. Die Klemmkraft wird durch ein Verdrehen des Klemmhebels 13 aufgebracht. Dies ist durch eine federbelastete Gewindeverbindung realisiert.

Die Axialführungseinrichtungen 7 sind im vorliegenden Beispiel jeweils als Gewindespindel ausgebildet. Dafür weist jede der Axialführungseinrichtungen 7 jeweils eine Welle 15 mit einem Außengewinde auf. An den axialen Enden der Welle 15 sind die Betätigungseinrichtungen 8 angeordnet, die im vorliegenden Fall als Betätigungsmuttern 16 ausgebildet sind. Die erste Rohrabschnittseinspannvorrichtung 5 weist zwei Bohrungen 17 auf. In jeder der Bohrungen 17 ist eine Gewindemutter 31 mit einem Innengewinde angeordnet, das zu dem Außengewinde der Wellen 15 korrespondiert. Die Wellen 15 sind also jeweils in die Gewindemuttern 31 eingeschraubt und erstrecken sich im Sinne einer Gewindeverbindung durch die Rohrabschnittseinspannvorrichtung 5. Die Rohrabschnittseinspannvorrichtung 5 stellt also die gewindebehaftete Rohrabschnittseinspannvorrichtung dar.

Eine andere Konstellation liegt an der zweiten Rohrabschnittseinspannvorrichtung 6 vor. Dort besteht keine Gewindeverbindung zwischen den Wellen 15 und der zweiten Rohrabschnittseinspannvorrichtung 6. Diese weist anstelle von Bohrungen mit Gewindemuttern zwei Bohrungen 18 auf, in denen jeweils ein Lager 19 angeordnet ist. Im vorliegenden Fall handelt es sich bei dem Lager 19 um eine Buchse 20. Die Buchse 20 ermöglicht ausschließlich rotatorische Bewegungen der Welle 15 bzw. von damit verbundenen Teilen relativ zu der zweiten Rohrabschnittseinspannvorrichtung 6. Die Rohrabschnittseinspannvorrichtung 6 stellt also die gelagerte Rohrabschnittseinspannvorrichtung dar.

Es ist aber auch möglich, dass die Rohrabschnittseinspannvorrichtung 5 die gelagerte Rohrabschnittseinspannvorrichtung und die Rohrabschnittseinspannvorrichtung 6 die gewindebehaftete Rohrabschnittseinspannvorrichtung darstellt. Auch eine gemischte Konstellation wäre denkbar.

Bei der gelagerten Rohrabschnittseinspannvorrichtung 6 handelt es sich um die Rohrabschnittseinspannvorrichtung, an der die Synchronisierungseinrichtung 9 angeordnet ist. Die in diesem Sinne gebildete Einheit stellt die Basiseinheit der Vorrichtung 1 dar. Die gewindebehaftete Rohrabschnittseinspannvorrichtung 5 stellt die Ergänzungseinheit dar. Die Ergänzungseinheit ist so ausgebildet, dass sie einfach und schnell von der Basiseinheit getrennt und durch eine andere Ergänzungseinheit ersetzt werden kann. Diese andere Ergänzungseinheit kann eine anders ausgebildete Rohrabschnittseinspannvorrichtung 5 aufweisen.

Für diesen Schnellwechsel weisen die Basiseinheit und die Ergänzungseinheit jeweils ein zueinander passendes Kopplungselement auf, das mittels eines Werkzeugs schnell geöffnet und geschlossen werden kann. Das Kopplungselement weist in diesem Fall eine Sicherungsmutter 33 auf.

Das Kopplungselement kann auch als ein ein Drehmoment übertragendes Kupplungselement ausgebildet sein, das eine schnell lösbare drehfeste Antriebsverbindung zwischen dem sich durch die erste Rohrabschnittseinspannvorrichtung 5 erstreckenden ersten Abschnitt 15a der Welle 15 und dem innerhalb der zweiten Rohrabschnittseinspannvorrichtung 6 angeordneten zweiten Abschnitt 15b der Welle 15 herstellt. Hierzu kann auch die Sicherungsmutter 33 dienen. Der erste Abschnitt 15a ist Teil der Ergänzungseinheit, während der zweite Abschnitt 15b Teil der Basiseinheit ist.

Die Welle 15, der erste Abschnitt 15a und/oder der zweite Abschnitt 15b weisen vorzugsweise mehrere Bauelemente auf, die fest und drehfest miteinander montiert sind.

Der zweite Abschnitt 15b der Welle 15 kann dann fester Bestandteil der zweiten Rohrabschnittseinspannvorrichtung 6 sein. Dieser zweite Abschnitt 15b kann je nach Verbindung mit unterschiedlichen ersten Rohrabschnittseinspannvorrichtungen 5 mit zugeordneten ersten Abschnitten 15a von Wellen 15 verbunden werden, so dass, wie zuvor erläutert, die Kopplung einer ersten Rohrabschnittseinspannvorrichtung 5 mit unterschiedlichen zweiten Rohrabschnittseinspannvorrichtungen 6 möglich ist. Der zweite Abschnitt 15b der Welle 15 ist damit multifunktional einsetzbar als Antriebselement für unterschiedliche erste Abschnitte 15a von Wellen 15 von ersten Rohrabschnittseinspannvorrichtungen 5.

Die Synchronisierungseinrichtung 9 ist in diesem Fall als Drehmomentübertragungseinrichtung ausgebildet und weist als Drehmomentübertragungselement eine Kette 21 auf. Das Übertragungselement könnte aber auch ein Riemen oder ein anderes geeignetes Element sein. Die Kette 21 greift in Zahnräder 22 ein, die drehfest auf der Welle 15 bzw. einer Fortsetzung davon angeordnet oder einstückig mit dieser ausgebildet sind. Im vorliegenden Fall weist jede Axialführungseinrichtung 7 zwei Zahnräder 22 auf. Es könnten aber auch weniger oder mehr Zahnräder 22 vorhanden sein.

Die Vorrichtung 1 ist kompakt und daher transportabel und kann problemlos zum jeweiligen Einsatzort gebracht und dort verwendet werden. Sie lässt sich also nicht nur an losen Rohrabschnitten 2, sondern auch an solchen Rohrabschnitten 2 einsetzen, die bereits Teil einer Rohrleitung 24 an ihrem Bestimmungsort sind.

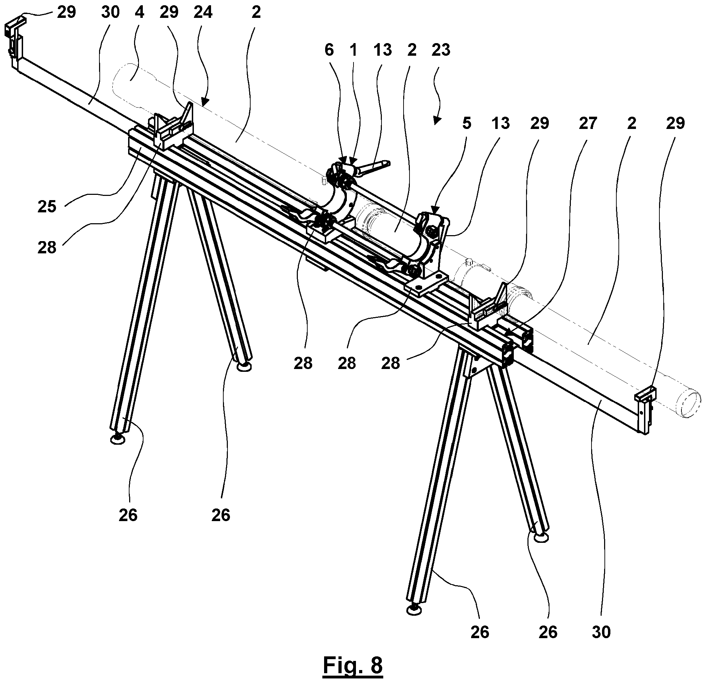

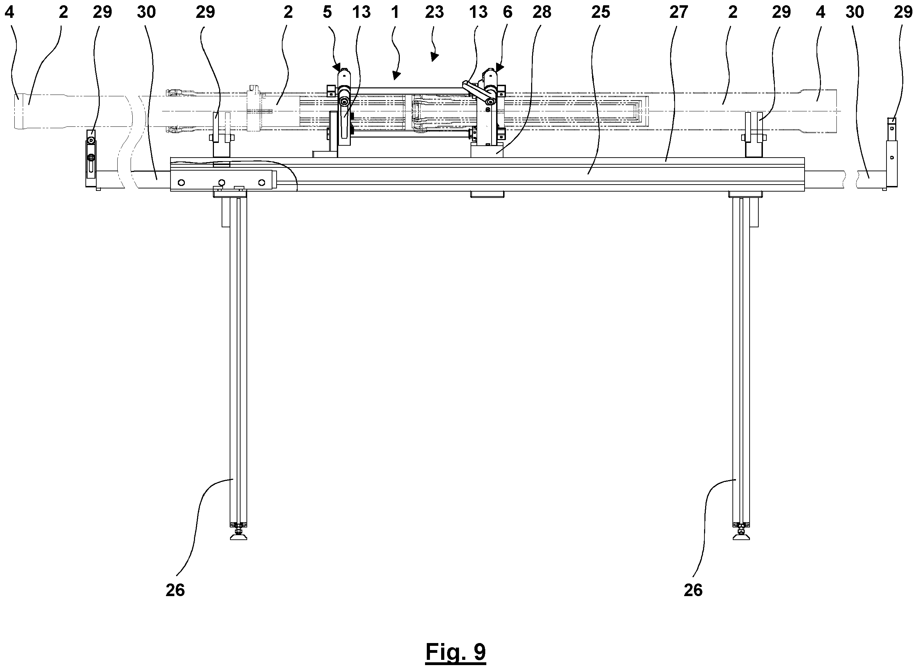

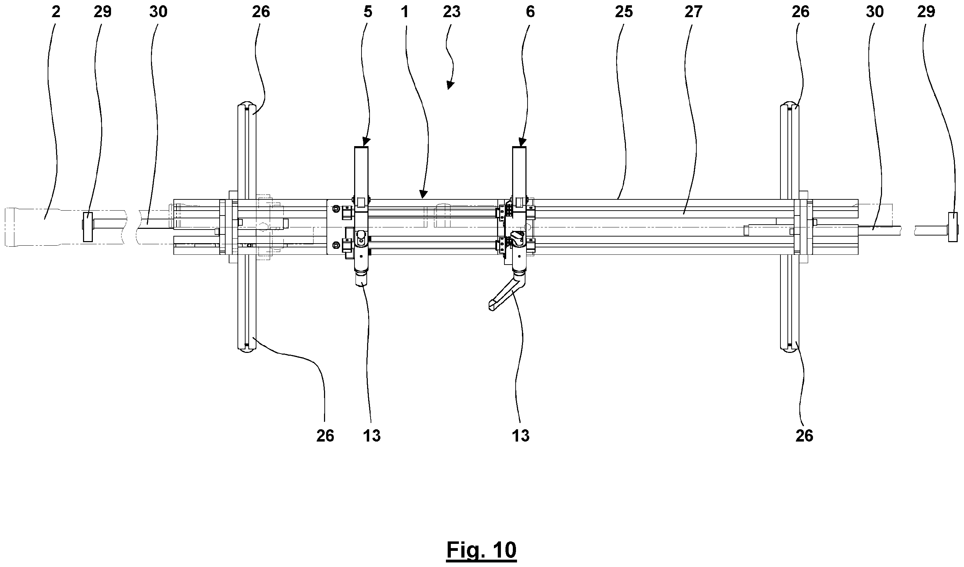

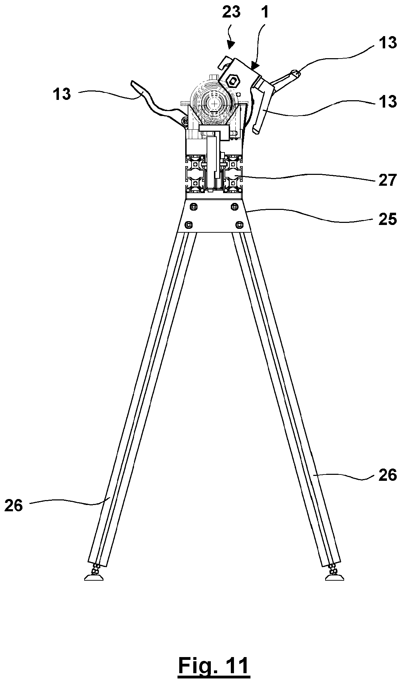

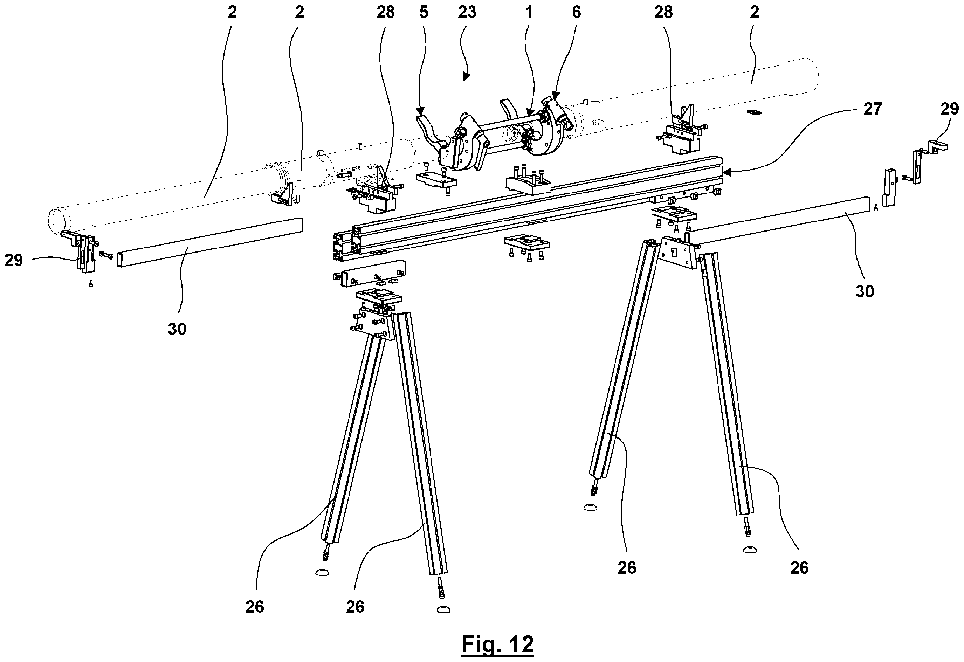

Unter Bezugnahme auf die Fig. 8-12 wird eine vorteilhafte Ergänzung der Vorrichtung 1 beschrieben, die dazu dient, mit der Vorrichtung 1 lose Rohrabschnitte 2 zu einer Rohrleitung 24 miteinander zu verbinden, die sich nicht in ihrer endgültigen Einbauposition befindet. Um diese Montage ergonomisch durchführen zu können, ist ein Montageständer 23 vorgesehen. Der Montageständer 23 nimmt die oberhalb beschriebene Vorrichtung 1 und eine Mehrzahl von miteinander zu verbindenden Rohrabschnitten 2 und die daraus gebildete Rohrleitung 24 auf.

Der Montageständer 23 weist einen Grundkörper 25 auf, an dem Beine 26 befestigt sind, um den Grundkörper 25 in einer für den Monteur ergonomischen Höhe anzuordnen.

Der Grundkörper 25 weist eine Schieneneinrichtung 27 auf, die zum verschieblichen Lagern der ersten Rohrabschnittseinspannvorrichtung 5 und der zweiten Rohrabschnittseinspannvorrichtung 6 ausgebildet ist. Hierfür sind die Rohrabschnittseinspannvorrichtungen 5, 6 jeweils mit einem Schlitten 28 verbunden, der gleitend in der Schieneneinrichtung 27 gelagert ist.

Der Montageständer 23 weist weiterhin Rohrabschnittsstützvorrichtungen 29 auf, die zum Stützen eines Rohrabschnitts 2 bzw. der bereits gebildeten Rohrleitung 24 dienen. Auch die Rohrabschnittsstützvorrichtungen 29 sind mittels Schlitten 28 verschieblich in der Schieneneinrichtung 27 gelagert. Um die abstützbare Länge der Rohrleitung 24 weiter zu erhöhen, weist der Montageständer 23 weiterhin an jeder seiner axialen Enden eine Auszugsstange 30 auf, an der eine weitere Rohrabschnittsstützvorrichtung 29 angeordnet ist. Die Auszugsstangen 30 sind jeweils relativ zu dem Grundkörper 25 ausziehbar und in diesem unterbringbar.

Unter Bezugnahme auf alle oberhalb beschriebenen Zeichnungen wird nun die Funktionsweise der Vorrichtung 1 anhand der Verbindung von zwei getrennten Rohrabschnitten 2 beschrieben:
Die erste Rohrabschnittseinspannvorrichtung 5 oder die zweite Rohrabschnittseinspannvorrichtung 6 wird geöffnet und ein erster Rohrabschnitt 2 dort eingesetzt. Anschließend wird der erste Rohrabschnitt 2 in der jeweiligen Rohrabschnittseinspannvorrichtung 5 oder 6 eingespannt. Nun wird die jeweils andere Rohrabschnittseinspannvorrichtung 6, 5 geöffnet und ein zweiter Rohrabschnitt 2 dort eingesetzt und in Richtung des ersten Rohrabschnitts 2 verschoben. Es wird eine eingesetzte teilverbundene Stellung der Rohrabschnitte 2 eingenommen, soweit diese mit Handkraft einfach erreichbar ist. Anschließend wird die Rohrabschnittseinspannvorrichtung 6, 5 geschlossen und auch der zweite Rohrabschnitt 2 gespannt. Falls der Abstand zwischen den beiden Rohrabschnittseinspannvorrichtungen 5, 6 nicht zur Länge der Rohrabschnitte 2 passt, wird dieser durch eine Betätigung einer der Betätigungseinrichtungen 8 entsprechend eingestellt.

Nun beginnt der eigentliche Verbindungsvorgang: Über ein geeignetes Werkzeug oder einen motorischen Antrieb wird eine der Betätigungseinrichtungen 8 und damit eine der Axialführungseinrichtungen 7 betätigt (in diesem Fall fortgesetzt verdreht). Die Drehbewegung wird über die Synchronisierungseinrichtung 9 auf die andere Axialführungseinrichtung 7 übertragen. Durch die Gewindeverbindungen zwischen den Axialführungseinrichtungen 7 und der ersten Rohrabschnittseinspannvorrichtung 5 wird die Rohrabschnittseinspannvorrichtung 5 an die Rohrabschnittseinspannvorrichtung 6 angenähert. Dementsprechend werden die eingespannten Rohrabschnitte 2 ineinandergeschoben.

Wenn die Endmontageposition erreicht ist, wird die Betätigung der Betätigungseinrichtung 8 eingestellt. Die Rohrabschnittseinspannvorrichtungen 5, 6 werden geöffnet und die nun gebildete Rohrleitung 24 aus der Vorrichtung 1 entnommen oder in der axialen Richtung verschoben, um einen weiteren Rohrabschnitt 2 mit der Rohrleitung 24 zu verbinden.

In dieser Weise wird im Wesentlichen auch bei einer Demontage einer aus Rohrabschnitten 2 bestehenden Rohrleitung 24 vorgegangen. Der wesentliche Unterschied besteht darin, dass der Betätigungsrichtungssinn der Betätigungseinrichtung 8 entgegengesetzt ist.

Die Wellen 15, über die die Rohrabschnittseinspannvorrichtungen 5, 6 miteinander gekoppelt sind, sind im Rahmen der Erfindung multifunktional genutzt: Einerseits bilden die Wellen 15 die beiden Axialführungseinrichtungen, mittels welcher unabhängig von dem Abstand der Rohrabschnittseinspannvorrichtungen 5, 6 gewährleistet ist, dass die Längsachsen der Rohrabschnittseinspannvorrichtungen 5, 6 und die Aufnahmen der Rohrabschnittseinspannvorrichtungen 5, 6 für die Rohrabschnitte koaxial zueinander angeordnet sind. Darüber hinaus sind die Wellen 15 mit ihren Außengewinden infolge des Eingriffes der Gewindemuttern 31 der ersten Rohrabschnittseinspannvorrichtungen 5 Bestandteil der Spindeltriebe, mittels welcher die Veränderung des Abstands der beiden Rohrabschnittseinspannvorrichtungen 5, 6 voneinander gewährleistet wird.

Möglich ist aber auch, dass die Wellen 15 mit den Außengewinden Bestandteile der Spindeltriebe sind, während zusätzliche Wellen oder anderweitige Führungseinrichtungen die Axialführung und koaxiale Ausrichtung der Rohrabschnittseinspannvorrichtungen 5, 6 gewährleisten.

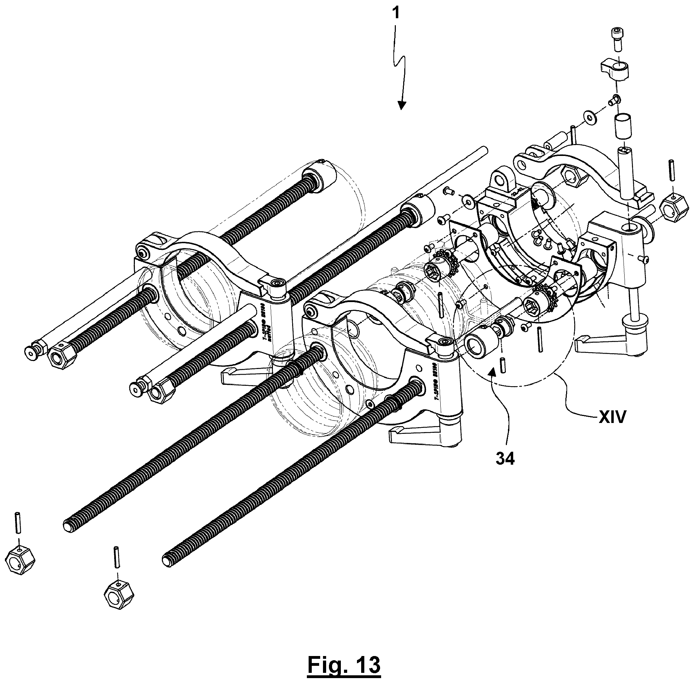

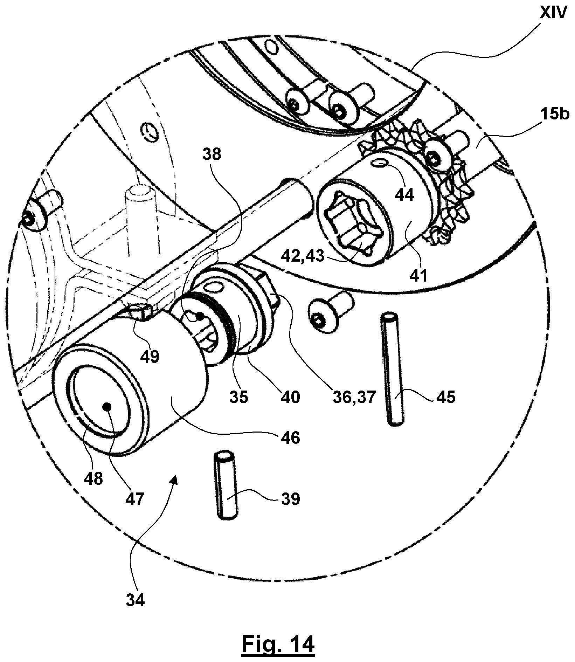

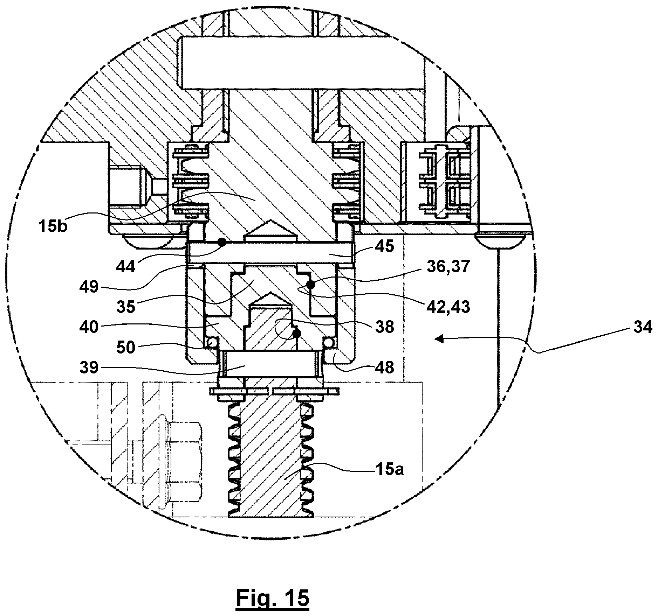

In Fig. 13-15 ist eine weitere Ausführungsform der Vorrichtung 1 dargestellt. Bei dieser Vorrichtung 1 findet eine Schnellwechseleinrichtung 34 Einsatz, über die eine Basiseinheit mit unterschiedlichen Ergänzungseinheiten gekoppelt werden kann, wobei die unterschiedlichen Ergänzungseinheiten dann beispielsweise für die Aufnahme von Rohrabschnitten mit unterschiedlichen Durchmessern und/oder Geometrien in den jeweiligen Rohrabschnittseinspannvorrichtungen 5 gestaltet und bestimmt sind.

Auch in diesem Fall weisen die Wellen 15 jeweils einen ersten Abschnitt 15a, der sich durch die erste Rohrabschnittseinspannvorrichtung 5 erstreckt, sowie einen innerhalb der zweiten Rohrabschnittseinspannvorrichtung 6 angeordneten zweiten Abschnitt 15b auf. Dieser zweite Abschnitt 15b bildet das Antriebselement, über welches die Wellen 15 einerseits axial festgelegt sind und andererseits in eine Drehbewegung versetzt werden. Die drehfeste Kopplung der beiden Abschnitte erfolgt über die Schnellwechseleinrichtung 34.

Die Schnellwechseleinrichtung 34 verfügt dabei über ein Kopplungselement 35, welches in dem dem zweiten Abschnitt zugewandten Endbereich ein Formschlusselement 36, insbesondere einen Außen-Mehrkant 37, aufweist. Auf der anderen Seite weist das Kopplungselement 35 eine unrunde Ausnehmung 38 auf, in der drehfest und formschlüssig ein Endbereich des ersten Abschnitts 15a der Welle 15 Aufnahme findet. Für das dargestellte Ausführungsbeispiel verfügt der erste Abschnitt 15a der Welle 15 in dem Endbereich über einen runden Querschnitt mit Abflachungen auf gegenüberliegenden Seiten, wobei dieser doppelt abgeflachte Querschnitt formschlüssig Aufnahme findet in einer entsprechend geformten Sackloch-Ausnehmung des Kopplungselements 35.

Ist der Endbereich des ersten Abschnitts der Welle 15 in die Ausnehmung 38 des Kopplungselements 35 eingesetzt, erstreckt sich eine Durchgangsbohrung durch das Kopplungselement 35 und den Endbereich des ersten Abschnitts der Welle 15. In diese Durchgangsausnehmung kann ein Sicherungsstift 39 eingesteckt werden, bei dem es sich um einen Pass- oder Pressstift handeln kann. Auf diese Weise ist das Kopplungselement 35 an dem ersten Abschnitt der Welle 15 befestigt und gesichert.

Das Kopplungselement 35 verfügt des Weiteren über eine umlaufende Rippe 40 oder einen umlaufenden Bund.

Der zweite Abschnitt 15b der Welle 15 trägt drehfest ein Gegen-Kopplungselement 41. Das Gegen-Kopplungselement 41 ist drehfest mit dem Kopplungselement 35 koppelbar. Zu diesem Zweck verfügt das Gegen-Kopplungselement 41 über ein Formschlusselement 42, welches hier als Innen-Mehrkant 43 ausgebildet ist. In dem Formschlusselement 42 findet formschlüssig zur Übertragung eines Drehmoments das Formschlusselement 36 Aufnahme. Ist das Kopplungselement 35 mit dem Formschlusselement 36 in das Gegen-Kopplungselement 41 eingesteckt, kommt die Rippe 40 zur Anlage an eine Stirnfläche des Gegen-Kopplungselements 41, womit die Montagestellung vorgegeben ist. In einer Durchgangsbohrung 44 des Gegen-Kopplungselements 41 ist ein Bajonettstift 45 fixiert, der sich mit mindestens einem Endbereich aus dem Gegen-Kopplungselement 41 radial nach außen heraus erstreckt.

Die Schnellwechseleinrichtung 34 verfügt des Weiteren über eine Überwurfhülse 46. Die Überwurfhülse 46 verfügt über eine Durchgangsausnehmung 47, durch die sich der erste Abschnitt 15a der Welle 15 hindurch erstrecken kann. In dem dem Gegen-Kopplungselement 41 abgewandten Endbereich weist die Durchgangsausnehmung 47 eine umlaufende Stufe 48 oder einen umlaufenden Bund auf, im Bereich welcher/dessen der Durchmesser der Durchgangsausnehmung 47 verringert ist.

Auf der anderen Seite verfügt die Überwurfhülse 46 über (mindestens) einen Bajonettschlitz 49. Der Bajonettschlitz 49 verfügt über einen Einführabschnitt, der parallel zur Längsachse der Welle 15 orientiert ist, sowie einen Verriegelungsabschnitt, der in Umfangsrichtung der Überwurfhülse 46 orientiert ist, ggf. auch mit einem geringen Neigungswinkel gegenüber der Umfangsrichtung.

In der montierten Stellung, in der das Kopplungselement 35 in das Gegen-Kopplungselement 41 eingesetzt ist und der Endbereich des ersten Abschnitts 15a der Welle 15 in dem Kopplungselement 35 mittels des Sicherungsstifts 39 gesichert ist, wird die Überwurfhülse 46 über das Kopplungselement 35 in Richtung des Gegen-Kopplungselements 41 geschoben, bis der radial herausragende Endbereich des Bajonettstifts 45 Aufnahme findet in dem Einführabschnitt des Bajonettschlitzes 49. Am Ende dieser Einführbewegung kommt die Stufe 48 der Überwurfhülse 46 zur Anlage an die Rippe 40 des Kopplungselements 35. In dieser axialen Endstellung kann eine Verdrehung der Überwurfhülse 46 erfolgen, womit der radial herausragende Endbereich des Bajonettstiftes 45 in den Verriegelungsabschnitt des Bajonettschlitzes 49 gelangt. Ist der Verriegelungsabschnitt geringfügig gegenüber der Umfangsrichtung geneigt, kann mit dieser Drehbewegung die Anpresskraft der Stufe 48 an die Rippe 40 sukzessive erhöht werden. In der Endstellung sichert die Überwurfhülse 46 die drehfeste Verbindung zwischen dem Kopplungselement 35 und dem Gegen-Kopplungselement 41 und damit zwischen dem ersten und zweiten Abschnitt 15a, 15b der Welle 15. Soll mit derselben Basiseinheit eine andere Ergänzungseinheit gekoppelt werden, kann die Bajonettverbindung gelöst werden, und der erste Abschnitt 15a der Welle 15 mit dem Kopplungselement 35 kann demontiert werden. Die neue Ergänzungseinheit kann dann mit einem entsprechenden Kopplungselement 35 an der Basiseinheit montiert werden.

Möglich ist, dass in der Schnellwechseleinrichtung 34 ein axial beaufschlagtes Federelement 50, insbesondere ein O-Ring vorhanden ist, welcher mit der Betätigung der Bajonettverbindung axial verspannt wird.

### BEZUGSZEICHENLISTE

- 1: Vorrichtung
- 2: Rohrabschnitt
- 3: normales Ende
- 4: gemufftes Ende
- 5: erste Rohrabschnittseinspannvorrichtung
- 6: zweite Rohrabschnittseinspannvorrichtung
- 7: Axialführungseinrichtung
- 8: Betätigungseinrichtung
- 9: Synchronisierungseinrichtung
- 10: Spannbacke
- 11: Schwenklager
- 12: Schließvorrichtung
- 13: Klemmhebel
- 14: Schließfortsatz
- 15: Welle
- 15a: erster Abschnitt der Welle
- 15b: zweiter Abschnitt der Welle
- 16: Betätigungsmutter
- 17: Bohrung
- 18: Bohrung
- 19: Lager
- 20: Buchse
- 21: Kette
- 22: Zahnrad
- 23: Montageständer
- 24: Rohrleitung
- 25: Grundkörper
- 26: Bein
- 27: Schieneneinrichtung
- 28: Schlitten
- 29: Rohrabschnittsstützvorrichtung
- 30: Auszugstange
- 31: Gewindemutter
- 32: Dichtung
- 33: Sicherungsmutter
- 34: Schnellwechseleinrichtung
- 35: Kopplungselement
- 36: Formschlusselement
- 37: Außen-Mehrkant
- 38: Ausnehmung
- 39: Sicherungsstift
- 40: Rippe
- 41: Gegen-Kopplungselement
- 42: Formschlusselement
- 43: Innen-Mehrkant
- 44: Durchgangsbohrung
- 45: Bajonettstift
- 46: Überwurfhülse
- 47: Durchgangsausnehmung
- 48: Stufe
- 49: Bajonettschlitz
- 50: Federelement

## Patentansprüche

1. Vorrichtung (1) zum Verbinden von getrennten Rohrabschnitten (2) miteinander und zum Trennen von miteinander verbundenen Rohrabschnitten (2) voneinander, mit
einer ersten Rohrabschnittseinspannvorrichtung (5) zum Einspannen eines ersten Rohrabschnitts (2),
einer zweiten Rohrabschnittseinspannvorrichtung (6) zum Einspannen eines zweiten Rohrabschnitts (2),
zwei Axialführungseinrichtungen (7), die die erste Rohrabschnittseinspannvorrichtung (5) mit der zweiten Rohrabschnittseinspannvorrichtung (6) verbinden,
einer Betätigungseinrichtung (8) für eine Betätigung der Vorrichtung (1) zum Verringern und Vergrößern des axialen Abstands zwischen den Rohrabschnittseinspannvorrichtungen (5, 6), und
einer Synchronisierungseinrichtung (9), die die Betätigungseinrichtung (8) und die Axialführungseinrichtungen (7) miteinander verbindet und eine Bewegung der Axialführungseinrichtungen (7) miteinander synchronisiert, **dadurch gekennzeichnet, dass**
die Synchronisierungseinrichtung (9) als Drehmomentübertragungseinrichtung ausgebildet ist.

2. Vorrichtung (1) nach Anspruch 1, **dadurch gekennzeichnet, dass** die Rohrabschnittseinspannvorrichtungen (5, 6), die Axialführungseinrichtungen (7) und die Synchronisierungseinrichtung (9) so ausgebildet und angeordnet sind, dass sich der axiale Abstand zwischen den Rohrabschnittseinspannvorrichtungen (5, 6) bei einer fortgesetzten Betätigung der Betätigungseinrichtung (8) in einem ersten Betätigungsrichtungssinn verringert und in einem entgegengesetzten zweiten Betätigungsrichtungssinn vergrößert.

3. Vorrichtung (1) nach Anspruch 2, **dadurch gekennzeichnet, dass** es sich bei dem Betätigungsrichtungssinn um einen Drehrichtungssinn handelt und eine Drehbewegung der Betätigungseinrichtung (8) zu einer Drehbewegung in den Axialführungseinrichtungen (7) führt.

4. Vorrichtung (1) nach mindestens einem der vorhergehenden Ansprüche, **dadurch gekennzeichnet, dass** die Vorrichtung (1) zwei miteinander synchronisierte Gewindespindeln bildet.

5. Vorrichtung (1) nach mindestens einem der vorhergehenden Ansprüche, **dadurch gekennzeichnet, dass** die Synchronisierungseinrichtung (9) eine Kette (21) oder einen Riemen aufweist.

6. Vorrichtung (1) nach mindestens einem der vorhergehenden Ansprüche, **dadurch gekennzeichnet, dass** die Axialführungseinrichtungen (7) jeweils eine Welle (15) mit einem Außengewinde aufweisen.

7. Vorrichtung (1) nach Anspruch 6, **dadurch gekennzeichnet, dass**
a1. die erste Rohrabschnittseinspannvorrichtung (5) zwei Bohrungen (17) mit einem Innengewinde aufweist, wobei das Innengewinde zu dem Außengewinde der Wellen (15) korrespondiert und sich die Wellen (15) durch die Bohrungen (17) erstrecken, und
a2. die zweite Rohrabschnittseinspannvorrichtung (6) zwei Bohrungen (18) mit jeweils einem Lager (19) aufweist, wobei sich die Wellen (15) oder mit diesen verbundene Teile durch die Lager (19) erstrecken, oder
b1. die zweite Rohrabschnittseinspannvorrichtung (6) zwei Bohrungen (17) mit einem Innengewinde aufweist, wobei das Innengewinde zu dem Außengewinde der Wellen (15) korrespondiert und sich die Wellen (15) durch die Bohrungen (17) erstrecken, und
b2. die erste Rohrabschnittseinspannvorrichtung (5) zwei Bohrungen (18) mit jeweils einem Lager (19) aufweist, wobei sich die Wellen (15) oder mit diesen verbundene Teile durch die Lager (19) erstrecken.

8. Vorrichtung (1) nach Anspruch 7, **dadurch gekennzeichnet, dass** die Synchronisierungseinrichtung (9) an der Rohrabschnittseinspannvorrichtung (5, 6) angeordnet ist, die die Lager (19) aufweist.

9. Vorrichtung (1) nach mindestens einem der vorhergehenden Ansprüche, **dadurch gekennzeichnet, dass** eine Mehrzahl von Betätigungseinrichtungen (8) vorhanden ist, die wahlweise für eine Betätigung der Vorrichtung (1) alternativ verwendbar sind.

10. Vorrichtung (1) nach mindestens einem der vorhergehenden Ansprüche, **dadurch gekennzeichnet, dass** die Betätigungseinrichtung (8) ein Werkzeugangriffselement zum Ansetzen eines Werkzeugs und zum Betätigen der Betätigungseinrichtung (8) mittels des Werkzeugs aufweist.

11. Vorrichtung (1) nach mindestens einem der vorhergehenden Ansprüche, **dadurch gekennzeichnet, dass** die Rohrabschnittseinspannvorrichtungen (5, 6) jeweils
zwei Spannbacken (10) aufweisen, deren Innengeometrie an die Außengeometrie der Rohrabschnitte (2) angepasst ist, und
ein Schwenklager (11) aufweisen, das die Spannbacken (10) miteinander verbindet.

12. Vorrichtung (1) nach Anspruch 11, **dadurch gekennzeichnet, dass** die Rohrabschnittseinspannvorrichtungen (5, 6) jeweils an einer dem Schwenklager (11) gegenüberliegenden Seite einen Klemmhebel (13) aufweisen.

13. Montageständer (23) zum Verbinden von getrennten Rohrabschnitten (2) miteinander mittels einer Vorrichtung (1) nach mindestens einem der vorhergehenden Ansprüche, mit
einem Grundkörper (25) mit einer Schieneneinrichtung (27) zum verschieblichen Lagern der ersten Rohrabschnittseinspannvorrichtung (5) und/oder der zweiten Rohrabschnittseinspannvorrichtung (6).

14. Montageständer (23) nach Anspruch 13, **gekennzeichnet durch** eine Rohrabschnittsstützvorrichtung (29), die verschieblich in der Schieneneinrichtung (27) aufgenommen ist und zum Stützen eines Rohrabschnitts (2) während der Montage ausgebildet und angeordnet ist.

15. Montageständer (23) nach Anspruch 13 oder 14, **gekennzeichnet durch** eine Rohrabschnittsstützvorrichtung (29), die an einer Auszugstange (30) angeordnet ist, wobei die Auszugstange (30) relativ zu dem Grundkörper (25) ausziehbar und in diesem unterbringbar ausgebildet und angeordnet ist.

## Claims

1. Device (1) for connecting separate tube sections (2) to each other and for disconnecting connected tube sections (2) from each other with
a first tube section clamping device (5) for clamping a first tube section (2),
a second tube section clamping device (6) for clamping a second tube section (2),
two axial guiding devices (7) which connect the first tube section clamping device (5) with the second tube section clamping device (6),
an actuating device for actuating the device (1) for decreasing and increasing the axial distance between the tube section clamping devices (5, 6), and
a synchronization device (9) which connects the actuating device (8) and the axial guiding devices (7) which each other and synchronizes the movement of the axial guiding devices (7) **characterized in that**,
the synchronization device (9) is embodied as a torque transferring device.

2. Device (1) according to claim 1, **characterized in that** the tube section clamping devices (5, 6), the axial guiding device (7) and the synchronization device (9) are embodied and arranged such that during a continuous actuation of the actuating device (8) the axial distance between the tube section clamping devices (5, 6) decreases in a first actuating sense of direction and increases in an opposite second actuating sense of direction.

3. Device (1) according to claim 2, **characterized in that** the actuating sense of direction is a sense of rotation and a rotating movement of the actuating device (8) leads to a rotating movement of the axial guiding devices (7).

4. Device (1) according to at least one of the preceding claims, **characterized in that** the device (1) forms two threaded spindles that are synchronized with each other.

5. Device (1) according to at least one of the preceding claims, **characterized in that** the synchronization device (9) comprises a chain (21) or a belt.

6. Device (1) according to at least one of the preceding claims, **characterized in that** the axial guiding devices (7) each comprise a shaft (15) with an external thread.

7. Device (1) according to claim 6, **characterized in that**
a1. the first tube section clamping device (5) comprises two bores (17) with an internal thread, the internal thread matching with the external thread of the shafts (15) and the shafts (15) extending through the bores (17), and
a2. the second tube section clamping device (6) comprises two bores (18) each comprising a bearing (19), the shafts (15) or parts connected to them extending through the bearings (19), or
b1. the second tube section clamping device (6) comprises two bores (17) with an internal thread, the internal thread matching with the external threat of the shafts (15) and the shafts (15) extending through the bores (17), and
b.2 the first tube section clamping device (5) comprises two bores (18) each comprising a bearing (19), the shafts (15) or the parts connected to them extending through the bearings (19).

8. Device (1) according to claim 7, **characterized in that** the synchronization device (9) is arranged at the tube section clamping device (5, 6) which comprises the bearings (19).

9. Device (1) according to one of the preceding claims, **characterized by** a plurality of actuating devices (8) which can optionally be used as alternatives for actuating the device (1).

10. Device (1) according to at least one of the preceding claims, **characterized in that** the actuating device (8) comprises a tool interaction element for interacting with a tool and for actuating the actuating device (8) with the tool.

11. Device (1) according to at least one of the preceding claims, **characterized in that** the tube section clamping devices (5, 6) each comprise
two clamping jaws (10) having inner geometries being adapted to the outer geometry of the tube sections (2) and
a swivel bearing (11) that connects the clamping jaws (10) to each other.

12. Device (1) according to claim 11, **characterized in that** on a side opposite to the swivel bearing (11) the tube section clamping devices (5, 6) each comprise a clamping lever (13).

13. Assembly stand (23) for connecting separate tube sections (2) with each other by a device (1) according to at least one of the preceding claims with
a base body (25) with a guide rail device (27) to provide a slidable support of the first tube section clamping device (5) and/or a second tube section clamping device (6).

14. Assembly stand (23) according to a claim 13, **characterized by** a tube section support device (23) which is received in a slidable way in the guide rail system (27) and which is designed and arranged to support a tube section (2) during the assembly.

15. Assembly stand (23) according to claim 13 or 14, **characterized by** a tube section support device (29) which is arranged at a drawbar (30), the drawbar (30) being extendable relative to the base body (25) and being designed and arranged to be stored in the base body (25).

## Revendications

1. Dispositif (1) pour le raccordement de sections de tubes séparées (2) entre elles et pour la séparation de sections de tubes reliées (2) les unes des autres, avec
un premier dispositif de serrage de section de tube (5), pour le serrage d'une première section de tube (2),
un deuxième dispositif de serrage de section de tube (6), pour le serrage d'une deuxième section de tube (2),
deux dispositifs de guidage axial (7) qui relient le premier dispositif de serrage de section de tube (5) avec le deuxième dispositif de serrage de section de tube (6),
un dispositif d'actionnement (8) pour un actionnement du dispositif (1) pour la réduction et l'augmentation de la distance axiale entre les dispositifs de serrage de sections de tubes (5, 6) et
un dispositif de synchronisation (9), qui relie entre eux le dispositif d'actionnement (8) et les dispositifs de guidage axial (7) et synchronise un déplacement des dispositifs de guidage axial (7) entre eux, **caractérisé en ce que**
le dispositif de synchronisation (9) est conçu comme un dispositif de transmission de couple.

2. Dispositif (1) selon la revendication 1, **caractérisé en ce que** les dispositifs de serrage de sections de tubes (5, 6), les dispositifs de guidage axial (7) et le dispositif de synchronisation (9) sont conçus et disposés de sorte que la distance axiale entre les dispositifs de serrage de sections de tubes (5, 6) diminue lors d'un actionnement continu du dispositif d'actionnement (8) dans un premier sens d'actionnement et augmente dans un deuxième sens d'actionnement opposé.

3. Dispositif (1) selon la revendication 2, **caractérisé en ce que** le sens d'actionnement est un sens de rotation et un déplacement rotatif du dispositif d'actionnement (8) provoque un déplacement rotatif dans les dispositifs de guidage axial (7).

4. Dispositif (1) selon au moins l'une des revendications précédentes, **caractérisé en ce que** le dispositif (1) constitue deux broches filetées synchronisées entre elles.

5. Dispositif (1) selon au moins l'une des revendications précédentes, **caractérisé en ce que** le dispositif de synchronisation (9) comprend une chaîne (21) ou une courroie.

6. Dispositif (1) selon au moins l'une des revendications précédentes, **caractérisé en ce que** les dispositifs de guidage axial (7) comprennent chacun un arbre (15) avec un filetage externe.

7. Dispositif (1) selon la revendication 6, **caractérisé en ce que**
a1. le premier dispositif de serrage de section de tube (5) présente deux alésages (17) avec un filetage interne, dans lequel le filetage interne correspond au filetage externe des arbres (15) et les arbres (15) s'étendent à travers les alésages (17) et
a2. le deuxième dispositif de serrage de section de tube (6) présente deux alésages (18) avec chacun un palier (19), dans lequel les arbres (15) ou les pièces reliées avec ceux-ci s'étendent à travers les paliers (19) ou
b1. le deuxième dispositif de serrage de section de tube (6) présente deux alésages (17) avec un filetage interne, dans lequel le filetage interne correspond au filetage externe des arbres (15) et les arbres (15) s'étendent à travers les alésages (17) et
b2. le premier dispositif de serrage de section de tube (5) présente deux alésages (18) avec chacun un palier (19), dans lequel les arbres (15) ou les pièces reliées avec ceux-ci s'étendent à travers les paliers (19).

8. Dispositif (1) selon la revendication 7, **caractérisé en ce que** le dispositif de synchronisation (9) est disposé sur le dispositif de serrage de section de tube (5, 6) qui comprend les paliers (19).

9. Dispositif (1) selon au moins l'une des revendications précédentes, **caractérisé en ce qu'**une pluralité de dispositifs d'actionnement (8) existent, qui peuvent être utilisés en alternance pour un actionnement du dispositif (1).

10. Dispositif (1) selon au moins l'une des revendications précédentes, **caractérisé en ce que** le dispositif d'actionnement (8) comprend un élément d'attaque d'outil pour la fixation d'un outil et pour l'actionnement du dispositif d'actionnement (8) au moyen de l'outil.

11. Dispositif (1) selon au moins l'une des revendications précédentes, **caractérisé en ce que** les dispositifs de serrage de sections de tubes (5, 6) comprennent chacun
deux mâchoires de serrage (10) dont la géométrie interne est adaptée à la géométrie externe des sections de tubes (2) et
un palier pivotant (11) qui relie les mâchoires de serrage (10) entre elles.

12. Dispositif (1) selon la revendication 11, **caractérisé en ce que** les dispositifs de serrage de sections de tubes (5, 6) comprennent respectivement sur un côté opposé au palier pivotant (11), un levier de serrage (13).

13. Pied de montage (23) pour le raccordement de sections de tubes (2) séparées entre elles au moyen d'un dispositif (1) selon au moins l'une des revendications précédentes, avec
un corps de base (25) avec un dispositif à glissière (27) pour le logement coulissant du premier dispositif de serrage de section de tube (5) et/ou du deuxième dispositif de serrage de section de tube (6).

14. Pied de montage (23) selon la revendication 13, **caractérisé par** un dispositif de support de section de tube (29), qui est logé de manière coulissante dans le dispositif à glissière (27) et qui est conçu et disposé pour le support d'une section de tube (2) pendant le montage.

15. Pied de montage (23) selon la revendication 13 ou 14, **caractérisé par** un dispositif de support de section de tube (29), qui est disposé sur une tige extensible (30), dans lequel la tige extensible (30) peut être étendue par rapport au corps de base (25) et est conçue et disposée de façon à pouvoir être logée dans celui-ci.
